# EUROPEAN PATENT SPECIFICATION

(11) **EP 3 841 866 B1**
(45) Date of publication and mention of the grant of the patent: **26.03.2025**
(21) Application number: 20217141.9
(22) Date of filing: 23.12.2020
(51) Int. Cl.: A01D 57/04, A01D 41/14

(54) **SYSTEM AND METHOD FOR CONTROLLING A POSITION OF A REEL OF AN AGRICULTURAL HEADER**
SYSTEM UND VERFAHREN ZUR STEUERUNG DER POSITION EINER HASPEL EINES LANDWIRTSCHAFTLICHEN ERNTEVORSATZES
SYSTÈME ET PROCÉDÉ POUR COMMANDER UNE POSITION D'UN RABATTEUR D'UNE MACHINE AGRICOLE

(30) Priority: 23.12.2019 US 201916724976
(43) Date of publication of application: 30.06.2021
(73) Proprietor: CNH Industrial Belgium N.V., 8210 Zedelgem (BE)
(72) Inventor: Hunt, Cory Douglas, Millersville, Pennsylvania 17551 (US); Martin, Jethro, Ephrata, Pennsylvania 17522 (US)
(74) Representative: CNH Industrial IP Department

(56) References cited:
- EP-A1- 3 011 824
- EP-A1- 3 420 798
- EP-A1- 3 494 771
- EP-A1- 3 552 474

## Description

### BACKGROUND

The present disclosure relates generally to a reel assembly of an agricultural header.

A harvester may be used to harvest crops, such as barley, beans, beets, carrots, corn, cotton, flax, oats, potatoes, rye, soybeans, wheat, or other plant crops. During operation of the harvester, the harvesting process may begin by removing a portion of a plant from a field using a header of the harvester. The header may cut the plant and transport the cut crops to a processing system of the harvester.

Certain headers include a cutter bar assembly configured to cut a portion of each crop (e.g., a stalk), thereby separating the cut crop from the soil. The cutter bar assembly may extend along a substantial portion of the width of the header at a forward end of the header. The header may also include one or more belts positioned behind the cutter bar assembly relative to the direction of travel of the harvester. The belt(s) are configured to transport the cut crops to an inlet of the processing system.
Certain headers may also include a reel assembly, which may include a reel having multiple fingers extending from a central framework. The central framework is driven to rotate, such that the fingers move in a circular pattern. The fingers are configured to engage the crops, thereby preparing the crops to be cut by the cutter bar assembly and/or urging the cut crops to move toward the belt(s). The reel is typically supported by multiple arms extending from a frame of the header. The reel assembly may include one or more actuators configured to drive the arms to rotate, thereby adjusting the position of the reel relative to the frame of the header.

European Patent Publication No. EP 3420798 A1 discloses a harvester head including a position adjustable reel having a first segment and a second segment, at least one sensor to sense relative positioning of the first segment and the second segment, and a controller that outputs signals to synchronise positioning of the first and second segments based up signals received from the at least one sensor.

European Patent Publication No. EP 3552474 A1 discloses a system for controlling an operative parameter of a harvester header of an agricultural harvesting machine. The header includes a first sensing arrangement for sensing a property of a field in front of the header in a contactless manner, a second sensing arrangement for providing a signal suited to derive a value of an adjustable work parameter of the header, an actuator for adjusting the work parameter, and a control unit for determining a control signal for the actuator based on the signals from the first and second sensing arrangements.

European Patent Publication No. EP 3494771 A1 discloses a method of operating a self-propelled harvester that comprises a header by which crop material is cut and collected, and discloses a control device by which adjustment parameters of the header are adjusted. At least one stand property of a crop material stand disposed in the field in front of the front attachment and a working result correlating with the at least one stand property of a harvested region behind the front attachment are detected by a sensor system. In dependence on the at least one stand property and the working result, a necessary adjustment at least of one of the adjustment parameters is determined for operating the front attachment in a high cut.

### BRIEF DESCRIPTION

In certain embodiments, a header system for an agricultural harvester includes a first reel section, a second reel section, and one or more sensors configured to generate data indicative of a parameter related to a crop within a field. The header system also includes a controller configured to receive the data and to control a first actuator of the header system to adjust the first reel section independently from the second reel section based on the data as the agricultural harvester travels through the field. The first reel section is adjusted to maintain a desired reel position relative to a crop canopy and/or relative to a ground of the field as the agricultural harvester travels through the field. The controller is configured to receive the data and to control a second actuator of the header system to adjust the second reel section independently from the first reel section based on the data as the agricultural harvester travels through the field, the second reel section being adjusted to maintain the desired reel position relative to the crop canopy and/or relative to the ground as the agricultural harvester travels through the field.

In certain examples, a control system for an agricultural header includes a controller comprising a processor configured to receive an input of a desired height of a first reel section, receive an indication of a crop attribute, determine a desired adjustment of the first reel section based on the input and the indication, and adjust the first reel section by the desired adjustment and independent from a second reel section.

In certain embodiments, a method of independently controlling a section of a reel of an agricultural header includes receiving a first signal indicative of a current position of the section of the reel at one or more processors, and receiving, at the one or more processors, a further signal indicative of a current position of the second section of the reel. The method also includes receiving a second signal indicative of a crop parameter at the one or more processors. The method further includes determining an adjustment for the first section of the reel based on the first signal and the second signal using the one or more processors, and determining, using the one or more processors, an adjustment for the second section of the reel based on the further signal and the second signal. The method further includes instructing a first actuator to adjust the first section of the reel independently from the second section of the reel of the agricultural header using the one or more processors. The first reel section is adjusted to maintain a desired reel position relative to a crop canopy and/or relative to a ground of the field as the agricultural harvester travels through the field. The method includes instructing, using the one or more processors, a second actuator to adjust the second section of the reel independently from the first section of the reel of the agricultural header, the second reel section being adjusted to maintain the desired reel position relative to the crop canopy and/or relative to the ground as the agricultural harvester travels through the field.

### DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an embodiment of an agricultural harvester;
FIG. 2 is a perspective view of a header that may be employed within the harvester of FIG. 1, in accordance with embodiments of the present disclosure;
FIG. 3 is a block diagram of a control system that may be used to control a reel assembly of the header of FIG. 2, in accordance with embodiments of the present disclosure;
FIG. 4 is a rear view of a portion of the reel assembly that may be employed within the header of FIG. 2, in accordance with embodiments of the present disclosure;
FIG. 5 is a rear view of the portion of the reel assembly of FIG. 4, wherein a section of the reel assembly is in a raised position;
FIG. 6 is a side view of a portion of the reel assembly that may be employed within the header of FIG. 2, in accordance with embodiments of the present disclosure;
FIG. 7 is a side view of the portion of the reel assembly of FIG. 6, wherein a section of the reel assembly is in a rearward position; and
FIG. 8 is a flow chart of an embodiment of a method for controlling a position of the reel assembly that may be employed within the header of FIG. 2.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

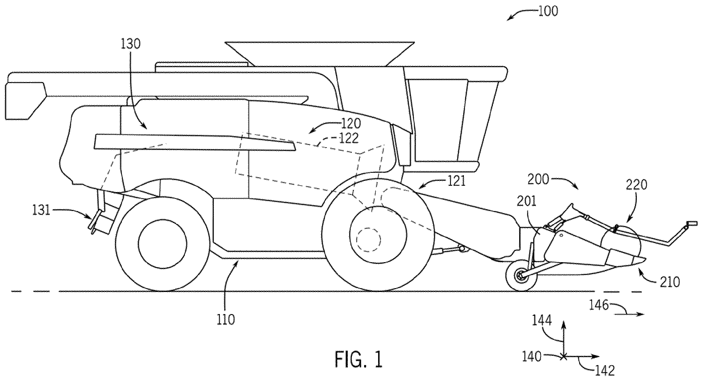

Turning to the drawings, FIG. 1 is a side view of an embodiment of a harvester 100 (e.g., agricultural harvester) having a header 200 (e.g., agricultural header) with a reel assembly 220. The harvester 100 includes a chassis 110 configured to support the header 200 and an agricultural crop processing system 120. As described in greater detail below, the header 200 is configured to cut crops and to transport the crops to an inlet 121 of the agricultural crop processing system 120 for further processing of the cut crops. The agricultural crop processing system 120 receives crops from the header 200 and separates desired crop material from crop residue. For example, the agricultural crop processing system 120 may include a thresher 122 having a cylindrical threshing rotor that transports the crops in a helical flow path through the harvester 100. In addition to transporting crops, the thresher 122 may separate certain desired crop material (e.g., grain) from the crop residue, such as husks and pods, and may enable the desired crop material to flow into a cleaning system located beneath the thresher 122. The cleaning system may remove debris from the desired crop material and transport the desired crop material to a storage compartment within the harvester 100. The crop residue may be transported from the thresher 122 to a crop residue handling system 130, which may remove the crop residue from the harvester 100 via a crop residue spreading system 131 positioned at the aft end of the harvester 100. To facilitate discussion, the harvester 100 and/or its components may be described with reference to a lateral axis or direction 140, a longitudinal axis or direction 142, and a vertical axis or direction 144. The harvester 100 and/or its components may also be described with reference to a direction of travel 146.

The header 200 includes a cutter bar assembly 210 configured to cut the crops within the field. The header 200 also includes a reel assembly 220 configured to engage the crops to prepare the crops to be cut by the cutter bar assembly 210 and/or to urge crops cut by the cutter bar assembly 210 onto belts that convey the cut crops toward the inlet 121 of the agricultural crop processing system 120. The reel assembly 220 includes a reel having multiple fingers extending from a central framework. The central framework is driven to rotate, such that the fingers engage the crops and urge the crops toward the cutter bar assembly 210 and the belts. Additionally, the reel may be supported by multiple reel arms that are coupled to a frame 201 of the header 200. Each reel arm of the multiple reel arms may be coupled to the frame 201 via a respective pivot joint. For example, one pivot joint is configured to enable a first arm of the multiple arms to pivot (e.g., about the lateral axis 140) relative to the frame 201 of to the header 200, and another pivot joint is configured to enable a second arm of the multiple arms to pivot (e.g., about the lateral axis 140) relative to the frame 201 of the header 200.

In the disclosed embodiments, the reel assembly 220 may include a sensor assembly (e.g., reel arm sensor assembly) having one or more sensors. In particular, at least one of the multiple reel arms may be coupled to a bracket (e.g., reel arm extension member) that supports a sensor. The sensor may be configured to facilitate detection of terrain features (e.g., a height, position, and/or density of the crops and/or surface features of the ground) as the harvester 100 travels through the field. For example, the sensor may be configured to detect the terrain features and to send a signal indicative of the terrain features to a controller (e.g., electronic controller) for processing.

In some embodiments, the reel assembly 220 may include actuators coupled to the header 200 and/or the reel arms. The actuators may be configured to move the reel arms (e.g., relative to the frame 201 of the header; via rotation at the pivot joints), and thus, the reel assembly 220, along the vertical axis 144 and/or the longitudinal axis 142 relative to the frame 201. According to the inevntion, the reel assembly 220 includes multiple reel sections that move independently from one another. The actuators are configured to move the reel arms to thereby move the reel sections independently from one another. For example, each actuator may be a hydraulic cylinder that retracts a piston rod to raise one reel section relative to another reel section. Similarly, the hydraulic cylinder may extend the piston rod to lower the one reel section relative to another reel section. Also, the actuators may be configured to move the reel sections forward and aft relative to one another.

By independently adjusting the height (e.g., along the vertical axis 40) and position (e.g., forward and aft position; along the longitudinal axis 42) of the reel sections, each of the reel sections are positioned at an appropriate position relative to the crop canopy and/or relative to the ground as the harvester 100 travels through the field. For example, an operator may provide an input (e.g., via a user interface in a cab of the harvester 100) to set a desired reel position relative to the crop canopy (e.g., desired reel height; set reel position; a distance below the crop canopy) for the reel sections of the reel assembly 220. However, as the harvester 100 travels through the field, the height of the crop canopy may change at a portion of the reel, such as at one reel section (e.g., forward of one reel section, at the portion of the field over which the one reel section may travel). In such cases, the sensor 252 may detect the height of the crop canopy at the one reel section and provide the signal indicative of the height of the crop canopy at the one reel section to the controller. Then, the controller may instruct the actuators to adjust the position of the one reel section to maintain the one reel section at the desired reel position (e.g., to maintain the one reel section at the distance below the crop canopy). In this way, the disclosed embodiments may maintain a substantially constant distance between each section of the reel assembly 220 and the crop canopy as the harvester 100 moves through the field. Various other features related to control of the reel sections of the reel assembly 220 are described in more detail below.

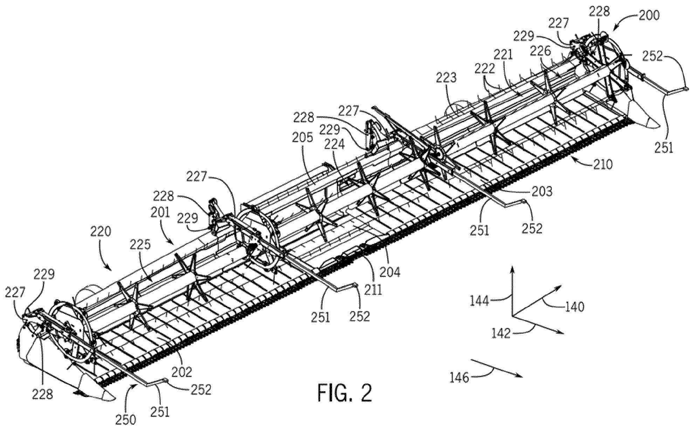

FIG. 2 is a perspective view of an embodiment of the header 200 that may be employed within the harvester 100 of FIG. 1. In the illustrated embodiment, the header 200 includes the cutter bar assembly 210 configured to cut a portion of each crop (e.g., a stalk), thereby separating the crop from the soil. The cutter bar assembly 210 is positioned at a forward end of the header 200 relative to the longitudinal axis 142 of the header 200. As illustrated, the cutter bar assembly 210 extends along a substantial portion of the width of the header 200 (e.g., the extent of the header 200 along the lateral axis 140). The cutter bar assembly 210 includes a blade support, a stationary guard assembly, and a moving blade assembly. The moving blade assembly is fixed to the blade support (e.g., above the blade support along the vertical axis 144 of the header 200), and the blade support/moving blade assembly is driven to oscillate relative to the stationary guard assembly. In the illustrated embodiment, the blade support/moving blade assembly is driven to oscillate by a driving mechanism 211 positioned at the lateral center of the header 200. However, in other embodiments, the blade support/moving blade assembly may be driven by another suitable mechanism (e.g., located at any suitable position on the header 200). As the harvester 100 is driven through the field, the cutter bar assembly 210 engages crops within the field, and the moving blade assembly cuts the crops (e.g., the stalks of the crops) in response to engagement of the cutter bar assembly 210 with the crops.

In the illustrated embodiment, the header 200 includes a first lateral belt 202 on a first lateral side of the header 200 and a second lateral belt 203 on a second lateral side of the header 200, opposite the first lateral side. Each belt is driven to rotate by a suitable drive mechanism, such as an electric motor or a hydraulic motor. The first lateral belt 202 and the second lateral belt 203 are driven such that the top surface of each belt moves laterally inward. In addition, the header 200 includes a longitudinal belt 204 positioned between the first lateral belt 202 and the second lateral belt 203 along the lateral axis 140. The longitudinal belt 204 is driven to rotate by a suitable drive mechanism, such as an electric motor or a hydraulic motor. The longitudinal belt 204 is driven such that the top surface of the longitudinal belt 204 moves rearwardly relative to the direction of travel 146.

In the illustrated embodiment, the crops cut by the cutter bar assembly 210 are directed toward the belts at least in part by the reel assembly 220, thereby substantially reducing the possibility of the cut crops falling onto the surface of the field. The reel assembly 220 includes a reel 221 having multiple fingers 222 extending from a central framework 223. The central framework 223 is driven to rotate such that the fingers 222 move (e.g., in a circular pattern). The fingers 222 are configured to engage the crops and urge the cut crops toward the belts. The cut crops that contact the top surface of the lateral belts 202, 203 are driven laterally inwardly to the longitudinal belt 204 due to the movement of the lateral belts 202, 203. In addition, cut crops that contact the longitudinal belt 204 and the cut crops provided to the longitudinal belt 204 by the lateral belts 202, 203 are driven rearwardly relative to the direction of travel 146 due to the movement of the longitudinal belt 204. Accordingly, the belts move the cut agricultural crops through an opening in the header 200 to the inlet 121 of the agricultural crop processing system 120 (FIG. 1).

In the illustrated embodiment, the reel 221 includes multiple sections coupled to one another. In particular, the reel 221 includes a center section 224 (e.g., positioned forward of a center section 205 of the frame 201 of the header 200 relative to the direction of travel 146), a first wing section 225, and a second wing section 226. In the illustrated embodiment, each section of the reel 221 is supported by one or more reel arms 227 that are coupled to the frame 201 of the header 200. While the reel 221 includes three sections 224, 225, 226 coupled to the frame 201 of the header 200 via four reel arms 227, it should be appreciated that the reel 221 may include any number of sections coupled to the frame 201 of the header 200 via any number of reel arms (e.g., one section coupled to the frame 201 of the header 200 via two or more reel arms; two sections coupled to the frame 201 of the header 200 via three or more reel arms; four sections coupled to the frame 201 of the header 200 via five or more reel arms).

Regardless of the number of reel arms 227, each reel arm 227 may be movably coupled to the frame 201 of the header 200. For example, in the illustrated embodiment, each reel arm 227 is pivotally coupled to the frame 201 of the header 200 via a respective pivot joint 229. The pivot joints 229 are configured to enable the reel arms 227 to pivot (e.g., about the lateral axis 140) relative to the frame 201 of the header 200. An actuator 228 may be coupled to each reel arm 227 and configured to drive the respective reel arm 227 to move (e.g., rotate about the pivot joint 229), thereby controlling a position of the reel 221 (e.g., including independently controlling respective positions of the reel sections 224, 225, 226 of the reel 221) relative to the frame 201 of the header 200 along the vertical axis 144. Such a configuration may enable the reel 221 to be positioned at an appropriate position (e.g., to maintain a substantially constant distance between each reel section 224, 225, 226 of the reel 221 and the crop canopy) along the vertical axis 144, and to thereby engage the crops to prepare the crops to be cut by the cutter bar assembly 210 and/or to urge the cut crops toward the belts 202, 203, 204, for example. In some embodiments, each section 224, 225, 226 of the reel 221 may also be configured to slide along its respective reel arm(s) 227 to move along the longitudinal axis 142 relative to the frame 201 of the header 200. In this way, each section 224, 225, 226 may be adjusted to be appropriately positioned forward of the cutter bar assembly 210 relative to the direction of travel 146 to enable the reel assembly 220 to engage the crop to prepare the crop to be cut by the cutter bar assembly 210, for example.

As noted above, the reel assembly 220 may include the sensor assembly 250. The sensor assembly 250 may include one or more brackets 251 (e.g., reel arm extension) and one or more sensors 252. The one or more sensors 252 may be configured to facilitate detection of terrain features, such as a height, a position, and/or a density of the crops and/or surface features of the ground, as the harvester 100 travels through the field. In the illustrated embodiment, each of the reel arms 227 is coupled to a respective bracket 251 that supports a respective sensor 252. However, only some of the reel arms 227 may be coupled to a respective bracket 251 that supports a respective sensor 252. For example, only the laterally-outer reel arms 227 may be coupled to a respective bracket 251 and a respective sensor 252, only the laterally-inner reel arm(s) 227 may be coupled to a respective bracket 251 and a respective sensor 252, and/or every other reel arm 227 (e.g., non-adjacent or alternating arms) may be coupled to a respective bracket 251 and a respective sensor 252. As discussed in more detail below, regardless of the number of brackets 251 and sensors 252 included in the sensor assembly 250, the sensors 252 may monitor the terrain features forward of the header 200 as the harvester 100 travels through the field. It should be appreciated that the sensors 252 may additionally or alternatively be coupled to the frame 201 of the header 200 (e.g., the brackets 251 may be fastened to the frame 201 of the header 200) and/or may be coupled to the harvester 100.

As the header 200 travels through the field, the sensors 252 of the sensor assembly 250 may monitor the terrain features forward of the header 200. As noted above, the terrain features may include a height of the crops (e.g., a crop canopy height; a height of the crops relative to the ground), a position of the crops (e.g., an orientation or angle of the crops relative to the ground, such as whether the crops are leaning toward or away from the header 200), and/or a density of the crops (e.g., a density of the crop canopy). As discussed below, the sensors 252 may provide sensor signals indicative of the terrain features to a control system (e.g., electronic control system), which may process the sensor signals to determine the appropriate position for each reel arm 227 and may output control signals to the actuators 228 to adjust each reel arm 227 to the appropriate position. In this way, the reel sections 224, 225, 226 may be adjusted based on (e.g., in response to) the terrain features as the header 200 travels through the field.

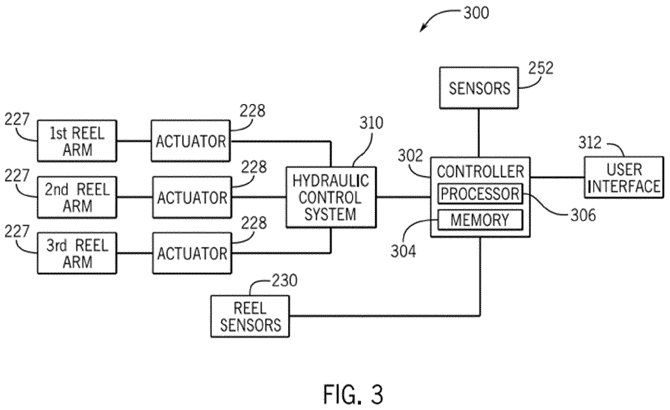

FIG. 3 is a diagram of an embodiment of a control system 300 (e.g., electronic control system) configured to control each actuator 228 coupled to the reel arms 227 of the reel assembly 220. In the illustrated embodiment, the control system 300 includes a controller 302 having a memory 304 and a processor 306. The memory 304 may be any type of non-transitory machine readable medium for storing data and executable instructions, such as random-access memory, read-only memory, rewritable flash memory, hard drives, optical discs, and the like. The processor 306 may execute instructions stored on the memory 304. For example, the memory 304 may contain machine readable code, such as instructions, that may be executed by the processor 84. In some embodiments, the memory 304 and processor 306 may enable automatic (e.g., processor/memory controlled) operation of the header 200, including automatic adjustment of the reel assembly 220 based on the terrain features. As will be described below, the controller 302 is configured to control a hydraulic control system 310 to adjust the height and/or the position of the reel sections 224, 225, 226 based on operator inputs, data from the sensors 252, pre-loaded design conditions, and the like.

As mentioned above, in the illustrated embodiment, the actuators 228 are hydraulic cylinders. The hydraulic control system 310 is configured to control the flow of hydraulic fluid to and from the actuators228. For instance, the hydraulic control system 310 may include tanks, pumps, and/or valves configured to regulate the flow of hydraulic fluid to the actuators 228. In the illustrated embodiment, the hydraulic control system 88 regulates the flow of the hydraulic fluid to the actuators 228 to adjust the position of the actuators 228, and thus, the position of the reel arms 227 (and the independent reel sections coupled thereto) based on control signals received from the controller 302.

As mentioned above, the sensors 252 are communicatively coupled to the controller 302. In the illustrated embodiment, the sensors 252 are ultrasonic transducers configured to send and receive acoustic energy to/from the agricultural field 12. However, any other suitable type of sensor that is capable of detecting the terrain features may be utilized. The sensors 252 may act as a height sensor configured to obtain data indicative of the height of a crop canopy. Additionally or alternatively, the sensors 252 may be configured to obtain data indicative of the position of the crop canopy and/or the density of the crop canopy. Additionally or alternatively, the sensors 252 may act as an obstacle sensor and/or ground contour sensor configured to determine the ground contour of the field.

The control system 300 is configured to receive the data (e.g., signals) from the sensors 252, process the data, determine an appropriate position for each reel arm 227 of the reel assembly 220 (e.g., that achieves an appropriate position for each section 224, 225, 226 of the reel assembly 220, such as to maintain the desired reel position at the set distance below the crop canopy), and to provide control signals to the hydraulic control system 310 to adjust the position of the actuators 228 to drive each reel arm 227 to the respective appropriate position as the harvester 100 travels through the field of crops based on the received data.

To carry out these techniques, the controller 302 may also be configured to receive data (e.g., signals) from reel sensors 230 that is indicative of respective current positions of the reel arms 227 (e.g., and each reel section 224, 225, 226 coupled thereto, relative to the ground and/or relative to the crop canopy). The respective current positions of the reel arms 227 may be used to determine how (e.g., up, down, forward, rearward) to adjust the reel arms 227 to reach the respective appropriate positions of the reel arms 227 and/or to provide feedback (e.g., as part of a feedback loop) to confirm that the reel arms 227 have reached their respective appropriate positions. For example, the controller 302 may compare the current position with the appropriate position and direct the hydraulic control system 310 to adjust the actuators 228 to drive each reel arm 227 to the respective appropriate position. As mentioned above, the control system 300 may continuously or periodically monitor the current position of the reel assembly 220 and continuously or periodically change the position of the reel sections 224, 225, 226, such as to maintain the desired reel position relative to the crop canopy.

The control system 300 may adjust the reel assembly 220 in various ways. For example, in some embodiments, an operator may provide an input (e.g., via a user interface 312) to set a desired reel position relative to the crop canopy (e.g., desired reel height; set reel position; a set distance below the crop canopy) for the reel sections of the reel assembly 220. It should be appreciated that the controller 302 may establish or receive the desired reel position relative to the crop canopy in other ways, such as via a programmed or manufacturer setting, for example. Regardless of the manner in which the desired reel position is obtained, the sensor 252 may detect the height of the crop canopy at the one or more reel sections (e.g., forward of the one or more reel section, at the area of the field over which the one or more reel sections may travel) and may provide the signal indicative of the height of the crop canopy at the one or more reel sections to the controller 302. Then, the controller 302 may instruct the actuators 228 to adjust the position of the one or more reel arms 227 to maintain the one or more reel sections at the desired reel position (e.g., to maintain the one or more reel sections at the set distance below the crop canopy). In this way, the disclosed embodiments may maintain a substantially constant distance between each section of the reel assembly 220 and the crop canopy as the harvester 100 moves through the field.

In some embodiments, an operator may provide an input (e.g., via the user interface 312) to set a desired reel position relative to the ground for the reel sections of the reel assembly 220 (e.g., desired reel height; set reel position; a set distance above the ground). It should be appreciated that the controller 302 may establish or receive the desired reel position relative to the ground in other ways, such as via a programmed or manufacturer setting, for example. Regardless of the manner in which the desired reel position is obtained, the sensor 252 may detect the ground contour at the one or more reel sections (e.g., forward of the one or more reel section, at the area of the field over which the one or more reel sections may travel) and may provide the signal indicative of the ground contour at the one or more reel sections to the controller 302. Then, the controller 302 may instruct the actuators 228 to adjust the position of the one or more reel arms 227 to maintain the one or more reel sections at the desired reel position (e.g., to maintain the one or more reel sections at the set distance above the ground). In this way, the disclosed embodiments may maintain a substantially constant distance between each section of the reel assembly 220 and the ground as the harvester 100 moves through the field.

In some such embodiments, the controller 302 may control the one or more reel arms 227 to maintain the one or more reel sections at the desired reel position at the set distance above the ground, as long as (e.g., only as long as) the desired reel position would also result in the one or more reel sections being below the crop canopy and/or at an appropriate position relative to another parameter (e.g., above a center of gravity of the crops, as determined by the controller 302 based on data from the sensors 252). For example, the operator may provide the input to set the desired reel position relative to the ground. The sensors 252 may monitor the ground contour and the height of the crop canopy, and the sensors 252 may provide the data indicative of the ground contour and the height of the crop canopy to the controller 302. The reel sensors 230 may also provide data indicative of the current positions of the reel arms 227 to the controller 302. As the harvester 100 travels through the field, the controller 302 may then adjust the actuators 228 to position each reel section at its respective desired reel position relative to the ground. However, if the desired reel position relative to the ground would result in the reel section being above the crop canopy, the controller 302 may block and/or limit adjustment of the actuator 228 to maintain the reel section between the ground and the crop canopy along the vertical axis 40.

In some embodiments, the operator may provide an input to instruct the controller 302 to control the actuators 228 to operator in different modes, such as a "crop canopy mode" in which the controller 302 controls the actuators 228 so that each reel section tracks the crop canopy (e.g., maintain the set distance below the crop canopy) or a "ground contour mode" in which the controller 302 controls the actuators 228 so that each reel section tracks the ground contours (e.g., maintain the set distance above the ground). Further, the controller 302 may be configured to automatically switch between these modes. For example, the controller 302 may be configured to switch from the ground contour mode to the crop canopy mode if the desired reel position relative to the ground would place (or result in) the reel section being above the crop canopy. The controller 302 may be configured to automatically switch modes based on various other factors, including the density of the crop, the position of the crop, a degree of variation (e.g., as determined by the controller 302 based on the data from the sensors 252) of the height of the crop canopy across the width of the header 200 and/or as the harvester 100 travels through the field, a degree of variation (e.g., as determined by the controller 302 based on the data from the sensors 252) of the ground contour across the width of the header 200 and/or as the harvester 100 travels through the field. For example, if the degree of variation in the height of the crop canopy is higher than the degree of variation in the ground contour, the controller 302 may operate in the ground contour mode to reduce adjustments. Alternatively, in such cases, the controller 302 may operate in the crop canopy mode to more closely account and match the variations.

The controller 302 may determine and/or take into account other factors to control the reel assembly 220. In some embodiments, the controller 302 may process the data from the sensors 252 to determine the density of the crop (e.g., at the crop canopy). The controller 302 may then adjust each reel section based on the density of the crop. For example, the operator may set the desired reel position relative to the crop canopy. However, the controller 302 may adjust the desired reel position relative to the crop canopy (e.g., adjust the set distance input by the operator; adjust to an adjusted desired reel position) for each reel section to account for the density, and then the controller 302 may maintain each reel sections at the respective adjusted desired reel position as the harvester 100 travels through field (e.g., through the portion of the field having the density). Thus, the controller 302 may determine the respective appropriate position for each reel section by taking into account the operator input (or other input of the desired position), the height of the crop canopy, the ground contour, and/or the density of the crop. Advantageously, this may enable each reel section to engage the crop at the respective appropriate position relative to the center of gravity of the crops (e.g., slightly above the center of gravity) to block the crops from flipping and/or to effectively urge the crops onto the cutter bar assembly 210.

Similarly, in some embodiments, the controller 302 may process the data from the sensors 252 to determine the position of the crops (e.g., the orientation relative to the ground). The controller 302 may then adjust each reel section based on the position of the crops. For example, the operator may set the desired reel position relative to the crop canopy. However, the controller 302 may adjust the desired reel position relative to the crop canopy and/or relative to the frame 201 of the header 200 (e.g., adjust the set distance input by the operator; adjust to an adjusted desired reel position; adjust up, down, forward, and/or aft) for each reel section to account for the position of the crops, and then the controller 302 may maintain the each reel sections at the respective adjusted desired reel position as the harvester 100 travels through field (e.g., through the portion of the field having the density). Thus, the controller 302 may determine the respective appropriate position for each reel section by taking into account the operator input (or other input of the desired position), the height of the crop canopy, the ground contour, the density of the crop, and/or the position of the crop. Advantageously, this may enable each reel section to engage the crop at the respective appropriate position relative to the center of gravity of the crops (e.g., slightly above the center of gravity) and/or relative to the cutter bar assembly 210 to block the crops from flipping and/or to effectively urge the crops onto the cutter bar assembly 210.

It should be appreciated that the controller 302 may also be configured to independently adjust the position of each reel section to avoid contact between the reel sections and the cutter bar assembly 210. For example, the header 200 may operate in a "flex mode" in which the cutter bar flexes as the harvester 100 travels through the field. In such cases, cutter bar sensors may monitor the position of the cutter bar assembly 210. The controller 302 may receive data (e.g., signals) indicative of the position of the cutter bar assembly 210 from the cutter bar sensors and may adjust the reel sections accordingly.

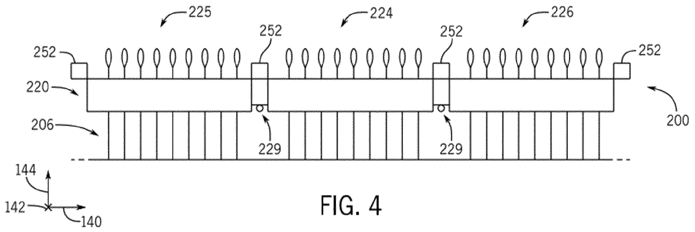

FIGS. 4-6 provide examples to facilitate understanding of the operation of the header 200, including operation of the sensor assembly 250 and adjustment of the reel sections 224, 225, 226, of the reel assembly 220. FIG. 4 is a rear view of an embodiment of a portion of the reel assembly 220 that includes the reel sections 224, 225, 226. The reel sections 224, 225, 226 may be in a first configuration (e.g., level configuration; the respective central axes of the sections may be aligned with one another and/or may be aligned with the lateral axis 140) while the reel assembly 220 travels over and/or interacts with a generally level field of crops 206. As shown, the reel sections 224, 225, 226 of the reel assembly 220 may be coupled together by pivot joints 229, which enable the reel sections 224, 225, 226 to rotate independently from one another to adjust to terrain features (e.g., a height, position, and/or density of the crops and/or surface features of the ground). However, the reel sections 224, 225, 226 of the reel assembly 220 may be coupled together and/or coupled to the frame 201 of the header 200 in other ways (e.g., via a sliding connection and/or another connection) that enable the reel sections 224, 225, 226 to move (e.g., slide and/or rotate) independently from one another.

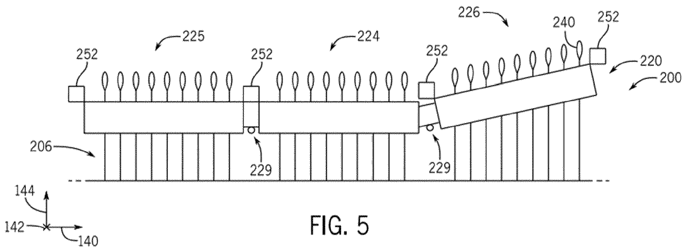

FIG. 5 is a rear view of an embodiment of a portion of the reel assembly 220 that includes the reel sections 224, 225, 226. The reel sections 224, 225, 226 may be in a second configuration (e.g., non-level configuration; the respective central axes of the sections are not aligned with one another and/or are not aligned with the lateral axis 140) while the reel assembly 220 travels over and/or interacts with a generally uneven crop canopy 240. In particular, one reel section 226 is raised (e.g., via rotation at the pivot joint 229) relative to the other sections 224, 225 due to the height of the crop canopy 240 at the one reel section 226 being greater than the height of the crop canopy 240 at the other sections 224, 225 to enable the reel section 226 to effectively engage the crops. While the illustrated embodiment shows the distance between the crop canopy and the reel section 226 being approximately equal across the width of the reel section 226 to facilitate discussion, it should be appreciated that the distance may not be substantially equal across the width of the reel section 226. Instead, the reel section 226 may be positioned so that at least some percentage of the reel section 226 is at the desired reel position or close to the desired reel position (e.g., approximately equal to or greater than 25, 30, 40, 50, 60, 70, 80, or 90 percent), for example. Generally, the controller 302 may determine the appropriate position to be the position at which the reel section 226 will effectively engage the crops, taking into account the operator input, the height of the crop canopy, the position of the crops, the density of the crops, and/or other factors.

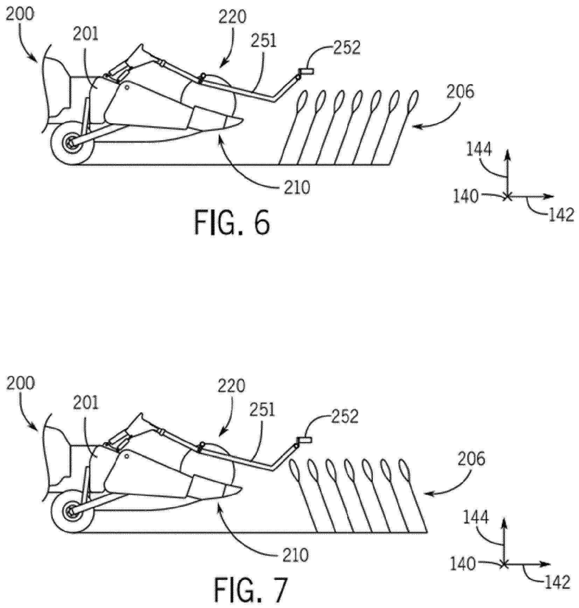

FIG 6 is a side view of an embodiment of a header 200 having the reel assembly 220, the cutter bar assembly 210, and the sensors 252. In the illustrated embodiment, the crops 206 are positioned to lean away from the header 200. In operation, the controller 302 may process the data from the sensors 252 to determine the position of the crops 206 and to determine the appropriate position for each reel section of the reel assembly 220. For example, with the illustrated position of the crops 206, the controller 302 may be configured to control the actuators 228 to move the reel assembly 220 to a first position relative to the frame 201 of the header 200 (e.g., away from the frame 201 of the header 200 along the longitudinal axis 142) to effectively engage the crops and/or to urge the crops toward the cutter bar assembly 210.

FIG 7 is a side view of an embodiment of a header 200 having the reel assembly 220, the cutter bar assembly 210, and the sensors 252. In the illustrated embodiment, the crops 206 are positioned to lean toward from the header 200. In operation, the controller 302 may process the data from the sensors 252 to determine the position of the crops 206 and to determine the appropriate position for each reel section of the reel assembly 220. For example, with the illustrated position of the crops 206, the controller 302 may be configured to control the actuators 228 to move the reel assembly 220 to a second position relative to the frame 201 of the header 200 (e.g., toward the the frame 201 of the header 200 along the longitudinal axis 142; closer to the frame 201 of the header 200 as compared to the first position of FIG. 5) to effectively engage the crops and/or to urge the crops toward the cutter bar assembly 210. For example, if the operator set the desired reel position relative to the crop canopy, the controller 302 may control each reel section to generally maintain the desired reel position relative to the crop canopy as the harvester 100 travels through the field. However, the controller 302 may adjust the desired reel position and/or determine the appropriate reel position based on the position of the crops (e.g., given the same desired reel position set by the operator, the controller 302 may adjust the desired reel position forward to the first position relative to the frame 201 of the header 200 while the crops 206 are positioned to lean away from the frame 201 of the header 200 and may adjust the desired reel position rearward to the second position relative to the frame 201 of the header 200 while the crops 206 are positioned to lean toward the frame 201 of the header 200), thereby enabling each reel section to more effectively engage the crops. Similar adjustments to the desired reel position may be made based on the density of the crops.

It should be appreciated that the bracket 251 may contact and/or be fastened (e.g., via one or more bolts or welds) to the frame 201 of the header 200. For example, at least a portion of the bracket 251 may be non-rotatably coupled or fixed to the frame 201 of the header 200, and the bracket 251 may extend up and over (e.g., forward) the reel assembly 220 to enable the sensor 252 to detect the terrain features forward of the header 200. It should be appreciated that any of the sensors 252 coupled to the reel arms 227 as shown in FIGS. 1-7 may be coupled to the frame 201 of the header 200. Furthermore, any of the features disclosed herein may be combined in any suitable manner.

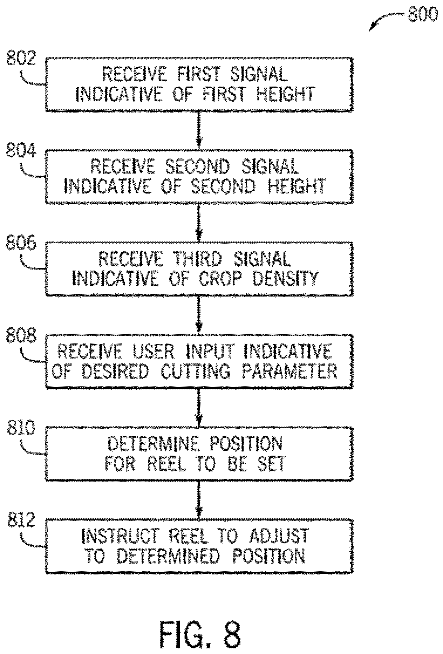

FIG. 8 is a flow chart of an embodiment of method 800 for independently adjusting the position of the reel sections. In the illustrated embodiment, the controller 302 receives a first signal indicative of a first height of a first section 224 relative to the ground of a field of crops 206 and/or relative to the crop canopy at block 802. The controller 302 may receive the first signal from the sensor 252. The controller 302 receives a second signal indicative of a second height of the first section 224 relative to the ground of the field of crops 206 and/or relative to the crop canopy at block 804. In certain embodiments, the controller 302 receives a third signal indicative of the density of the crops at block 806. The controller 302 may receive the third signal from the sensor 252. As discussed above, the controller 302 may additionally or alternatively receive other parameters or attributes, such as the position of the crops (e.g., the orientation). In some embodiments, the controller 302 is configured to receive an operator input indicative of desired cutting parameters, such as the desired reel position relative to the ground and/or relative to the crop canopy at block 808.

In some embodiments, the controller 302 is configured to determine a desired adjustment of the first section 224 based on the first signal, the second signal, the third signal, and/or the operator input of the desired cutting parameter at block 810. The controller 302 may then instruct the actuator 228 to adjust the first section 224 by the desired adjustment at block 812 (e.g., to maintain the desired cutting parameter as the harvester 100 travels through the field and/or to maintain the desired cutting parameter in a manner that also accounts for various other factors, such as changes in density of the crop). For example, the controller 302 may send a signal to the actuator 228 to raise the height of the first section 224 of the reel assembly 220 relative to the second section 225 such that a desired cut crop length is achieved.

## Claims

1. A header (200) system for an agricultural harvester (100), comprising:
a first reel section (225);
a second reel section (224); and,
one or more sensors (252) configured to generate data indicative of a parameter related to a crop (206) within a field,
**characterised in that** the header (200) system comprises:
a controller (302) configured to receive the data and to control a first actuator (228) of the header system to adjust the first reel section (225) independently from the second reel section (224) based on the data as the agricultural harvester (100) travels through the field, the first reel section (225) being adjusted to maintain a desired reel position relative to a crop canopy and/or relative to a ground of the field as the agricultural harvester (100) travels through the field, wherein the controller (302) is configured to receive the data and to control a second actuator (228) of the header system to adjust the second reel section (224) independently from the first reel section (225) based on the data as the agricultural harvester (100) travels through the field, the second reel section (224) being adjusted to maintain the desired reel position relative to the crop canopy and/or relative to the ground as the agricultural harvester (100) travels through the field.

2. The header (200) system of claim 1, wherein the parameter comprises a density of the crop (206).

3. The header (200) system of claim 1, wherein the parameter comprises a height of the crop (206).

4. The header (200) system of claim 1, wherein the parameter comprises an angle of the crop (206) relative to a ground of the field.

5. The header (200) system of claims 1-4, wherein the controller (302) is configured to control the first actuator (228) to rotate the first reel section (225) about a pivot joint (229) to thereby move the first reel section (225) along a vertical axis (144) of the header (200) system.

6. The header (200) system of claims 1-5, wherein the controller (302) is configured to control the first actuator (228) to adjust the first reel section (225) forward and rearward relative to a direction of travel.

7. The header (200) system of claims 1-6, wherein the controller (302) is configured to receive an operator input of a desired reel height, and to control the first actuator (228) to adjust the first reel section (225) to maintain the desired reel height as the agricultural harvester (100) travels through the field.

8. The header (200) system of claim 7, wherein the desired reel height is a height relative to the crop (206) canopy.

9. The header (200) system of claim 7, wherein the desired reel height is a height relative to the ground of the field.

10. The header (200) system of claims 1-9, comprising a third reel section (226), wherein the controller (302) is configured to control a third actuator (228) to adjust the third reel section (226) independently from the first reel section (225) as the agricultural harvester (100) travels through the field.

11. A method of independently controlling first and second sections (225, 224) of a reel (221) of an agricultural header (200), comprising:
receiving, at one or more processors (306), a first signal indicative of a current position of the first section (225) of the reel (221); receiving, at the one or more processors (306), a further signal indicative of a current position of the second section (224) of the reel (221);
receiving, at the one or more processors (306), a second signal indicative of a crop parameter;
determining, using the one or more processors (306), an adjustment for the first section (225) of the reel (221) based on the first signal and the second signal; determining, using the one or more processors (306), an adjustment for the second section (224) of the reel (221) based on the further signal and the second signal; and
instructing, using the one or more processors (306), a first actuator (228) to adjust the first section (225) of the reel (221) independently from the second section (224) of the reel (221) of the agricultural header (200), the first reel section (225) being adjusted to maintain a desired reel position relative to a crop canopy and/or relative to a ground of the field as the agricultural harvester (100) travels through the field; instructing, using the one or more processors (306), a second actuator (228) to adjust the second section (224) of the reel (221) independently from the first section (225) of the reel (221) of the agricultural header (200), the second reel section (224) being adjusted to maintain the desired reel position relative to the crop canopy and/or relative to the ground as the agricultural harvester (100) travels through the field.

12. The method of claim 11, comprising instructing the first actuator (228) to adjust the first section (225) of the reel (221) along a longitudinal axis (142) of the agricultural header (200), using the one or more processors (306).

13. The method of claims 11-12, comprising instructing the first actuator (228) to adjust the first section (225) of the reel (221) along a vertical axis (144) of the agricultural header (200), using the one or more processors (306).

14. The method of claims 11-13, wherein the crop parameter comprises a density of a crop (206).

## Patentansprüche

1. Erntevorsatz (200) - System für eine landwirtschaftliche Erntemaschine (100) mit:
einem ersten Haspelabschnitt (225);
einem zweiten Haspelabschnitt (224); und
einem oder mehreren Sensoren (252), die dazu eingerichtet sind, Daten zu erzeugen, die kennzeichnend für einen Parameter sind, der Erntegut (206) in einem Feld betrifft,
**dadurch gekennzeichnet, dass** das Erntevorsatz (200) - System umfasst:
ein Steuergerät (302), das dazu eingerichtet ist, die Daten zu empfangen und eine erste Betätigungseinrichtung (228) des Erntevorsatz-Systems zum Verstellen des ersten Haspelabschnitts (225) unabhängig von dem zweiten Haspelabschnitt (224) basierend auf den Daten zu steuern, während die landwirtschaftliche Erntemaschine (100) sich über das Feld bewegt, wobei der erste Haspelabschnitt (225) verstellt wird, um eine Soll-Haspelposition relativ zu einer Erntegutbedeckung und/oder relativ zu einem Boden des Felds beizubehalten, während die landwirtschaftliche Erntemaschine (100) sich über das Feld bewegt, wobei das Steuergerät (302) dazu eingerichtet ist, die Daten zu empfangen und eine zweite Betätigungseinrichtung (228) des Erntevorsatz-Systems zum Verstellen des zweiten Haspelabschnitts (224) unabhängig von dem ersten Haspelabschnitt (225) basierend auf den Daten zu steuern, während die landwirtschaftliche Erntemaschine (100) sich über das Feld bewegt, wobei der zweite Haspelabschnitt (224) verstellt wird, um die Soll-Haspelposition relativ zu der Erntegutbedeckung und/oder relativ zu dem Boden beizubehalten, während die landwirtschaftliche Erntemaschine (100) sich über das Feld bewegt.

2. Erntevorsatz (200) - System nach Anspruch 1, wobei der Parameter eine Dichte des Ernteguts (206) umfasst.

3. Erntevorsatz (200) - System nach Anspruch 1, wobei der Parameter eine Höhe des Ernteguts (206) umfasst.

4. Erntevorsatz (200) - System nach Anspruch 1, wobei der Parameter einen Winkel des Ernteguts (206) relativ zu einem Boden des Felds umfasst.

5. Erntevorsatz (200) - System nach einem der Ansprüche 1 bis 4, wobei das Steuergerät (302) dazu eingerichtet ist, die erste Betätigungseinrichtung (228) zum Rotieren des ersten Haspelabschnitts (225) um ein Drehgelenk (229) zu steuern, um dadurch den ersten Haspelabschnitt (225) entlang einer vertikalen Achse (144) des Erntevorsatz (200) - Systems zu bewegen.

6. Erntevorsatz (200) - System nach einem der Ansprüche 1 bis 5, wobei das Steuergerät (302) dazu eingerichtet ist, die erste Betätigungseinrichtung (228) zum Verstellen des ersten Haspelabschnitts (225) nach vorne und nach hinten relativ zu einer Bewegungsrichtung zu steuern.

7. Erntevorsatz (200) - System nach einem der Ansprüche 1 bis 6, wobei das Steuergerät (302) dazu eingerichtet ist, eine Bedienereingabe einer Soll-Haspelhöhe zu empfangen und die Betätigungseinrichtung (228) zum Verstellen des ersten Haspelabschnitts (225) zu steuern, um die Soll-Haspelhöhe beizubehalten, während die landwirtschaftliche Erntemaschine (100) sich über das Feld bewegt.

8. Erntevorsatz (200) - System nach Anspruch 7, wobei die Soll-Haspelhöhe eine Höhe relativ zu der Erntegut (206) - Bedeckung ist.

9. Erntevorsatz (200) - System nach Anspruch 7, wobei die Soll-Haspelhöhe eine Höhe relativ zu dem Boden des Felds ist.

10. Erntevorsatz (200) - System nach einem der Ansprüche 1 bis 9, das einen dritten Haspelabschnitt (226) umfasst, wobei das Steuergerät (302) dazu eingerichtet ist, eine dritte Betätigungseinrichtung (228) zum Verstellen des dritten Haspelabschnitts (226) unabhängig von dem ersten Haspelabschnitt (225) zu steuern, während die landwirtschaftliche Erntemaschine (100) sich über das Feld bewegt.

11. Verfahren zum unabhängigen Steuern eines ersten und zweiten Abschnitts (225, 224) einer Haspel (221) eines landwirtschaftlichen Erntevorsatzes (200) umfassend:
Empfangen eines ersten Signals in einem oder in mehreren Prozessoren (306), das kennzeichnend für eine gegenwärtige Position des ersten Abschnitts (225) der Haspel (221) ist;
Empfangen eines weiteren Signals in dem einen oder in den mehreren Prozessoren (306), das kennzeichnend für eine gegenwärtige Position des zweiten Abschnitts (224) der Haspel (221) ist;
Empfangen eines zweiten Signals in dem einen oder in den mehreren Prozessoren (306), das kennzeichnend für einen Erntegutparameter ist;
Bestimmen einer Verstellung für den ersten Abschnitt (225) der Haspel (221) basierend auf dem ersten Signal und dem zweiten Signal unter Verwendung des einen oder der mehreren Prozessoren (306);
Bestimmen einer Verstellung für den zweiten Abschnitt (224) der Haspel (221) basierend auf dem weiteren Signal und dem zweiten Signal unter Verwendung des einen oder der mehreren Prozessoren (306); und
Anweisen, unter Verwendung des einen oder der mehreren Prozessoren (306), einer ersten Betätigungseinrichtung (228) zum Verstellen des ersten Abschnitts (225) der Haspel (221) unabhängig von dem zweiten Abschnitt (224) der Haspel (221) des landwirtschaftlichen Erntevorsatzes (200), wobei der erste Haspelabschnitt (225) verstellt wird, um eine Soll-Haspelposition relativ zu einer Erntegutbedeckung und/oder relativ zu einem Boden des Felds beizubehalten, während die landwirtschaftliche Erntemaschine (100) sich über das Feld bewegt;
Anweisen, unter Verwendung des einen oder der mehreren Prozessoren (306), einer zweiten Betätigungseinrichtung (228) zum Verstellen des zweiten Abschnitts (224) der Haspel (221) unabhängig von dem ersten Abschnitt (225) der Haspel (221) des landwirtschaftlichen Erntevorsatzes (200), wobei der zweite Haspelabschnitt (224) verstellt wird, um die Soll-Haspelposition relativ zu der Erntegutbedeckung und/oder relativ zu dem Boden beizubehalten, während die landwirtschaftliche Erntemaschine (100) sich über das Feld bewegt.

12. Verfahren nach Anspruch 11, umfassend ein Steuern der ersten Betätigungseinrichtung (228) zum Verstellen des ersten Abschnitts (225) der Haspel (221) entlang einer Längsachse (142) des landwirtschaftlichen Erntevorsatzes (200) unter Verwendung des einen oder der mehreren Prozessoren (306).

13. Verfahren nach einem der Ansprüche 11 bis 12, umfassend ein Steuern der ersten Betätigungseinrichtung (228) zum Verstellen des ersten Abschnitts (225) der Haspel (221) entlang einer vertikalen Achse (144) des landwirtschaftlichen Erntevorsatzes (200) unter Verwendung des einen oder der mehreren Prozessoren (306).

14. Verfahren nach einem der Ansprüche 11 bis 13, wobei der Erntegutparameter eine Dichte eines Ernteguts (200) umfasst.

## Revendications

1. Un système d'organe de coupe (200) pour une moissonneuse agricole (100), comprenant :
une première section de rabatteur (225) ;
une deuxième section de rabatteur (224) ; et,
un ou plusieurs capteurs (252) configurés pour générer des données indiquant un paramètre lié à une récolte (206) dans un champ,
**caractérisé en ce que** le système d'organe de coupe (200) comprend :
un contrôleur (302) configuré pour recevoir les données et pour commander un premier actionneur (228) du système d'organe de coupe afin de régler la première section de rabatteur (225) indépendamment de la deuxième section de rabatteur (224) en fonction des données au fur et à mesure que la moissonneuse agricole (100) se déplace dans le champ, la première section de rabatteur (225) étant réglée pour maintenir une position de rabatteur souhaitée par rapport à un couvert végétal et/ou par rapport à un sol du champ au fur et à mesure que la moissonneuse agricole (100) se déplace dans le champ, dans lequel le contrôleur (302) est configuré pour recevoir les données et pour commander un deuxième actionneur (228) du système d'organe de coupe afin de régler la deuxième section de rabatteur (224) indépendamment de la première section de rabatteur (225) en fonction des données au fur et à mesure que la moissonneuse agricole (100) se déplace dans le champ, la deuxième section de rabatteur (224) étant réglée pour maintenir la position de rabatteur souhaitée par rapport au couvert végétal et/ou au sol au fur et à mesure que la moissonneuse agricole (100) se déplace dans le champ.

2. Le système d'organe de coupe (200) selon la revendication 1, dans lequel le paramètre comprend une densité de la récolte (206).

3. Le système d'organe de coupe (200) selon la revendication 1, dans lequel le paramètre comprend une hauteur de la récolte (206).

4. Le système d'organe de coupe (200) selon la revendication 1, dans lequel le paramètre comprend un angle de la récolte (206) par rapport à un sol du champ.

5. Le système d'organe de coupe (200) selon les revendications 1 à 4, dans lequel le contrôleur (302) est configuré pour commander le premier actionneur (228) afin de faire pivoter la première section de rabatteur (225) autour d'un joint de pivot (229) pour ainsi déplacer la première section de rabatteur (225) le long d'un axe vertical (144) du système d'organe de coupe (200).

6. Le système d'organe de coupe (200) selon les revendications 1 à 5, dans lequel le contrôleur (302) est configuré pour commander le premier actionneur (228) afin de régler la première section de rabatteur (225) vers l'avant et vers l'arrière par rapport à un sens de déplacement.

7. Le système d'organe de coupe (200) selon les revendications 1 à 6, dans lequel le contrôleur (302) est configuré pour recevoir une saisie de l'opérateur concernant une hauteur de rabatteur souhaitée, et pour commander le premier actionneur (228) afin de régler la première section de rabatteur (225) pour maintenir la hauteur de rabatteur souhaitée au fur et à mesure que la moissonneuse agricole (100) se déplace dans le champ.

8. Le système d'organe de coupe (200) selon la revendication 7, dans lequel la hauteur de rabatteur souhaitée correspond à une hauteur relative au couvert végétal (206).

9. Le système d'organe de coupe (200) selon la revendication 7, dans lequel la hauteur de rabatteur souhaitée correspond à une hauteur par rapport au sol du champ.

10. Le système d'organe de coupe (200) selon les revendications 1 à 9, comprenant une troisième section de rabatteur (226), dans lequel le contrôleur (302) est configuré pour commander un troisième actionneur (228) afin de régler la troisième section de rabatteur (226) indépendamment de la première section de rabatteur (225) au fur et à mesure que la moissonneuse agricole (100) se déplace dans le champ.

11. Un procédé commandant de manière indépendante la première et la deuxième section (225, 224) d'un rabatteur (221) d'un organe de coupe agricole (200), comprenant :
la réception, au niveau d'un ou de plusieurs processeurs (306), d'un premier signal indiquant une position actuelle de la première section (225) du rabatteur (221) ;
la réception, au niveau du ou des processeurs (306), d'un autre signal indiquant une position actuelle de la deuxième section (224) du rabatteur (221) ;
la réception, au niveau du ou des processeurs (306), d'un second signal indiquant un paramètre de récolte ;
la détermination, à l'aide du ou des processeurs (306), d'un réglage pour la première section (225) du rabatteur (221) en fonction du premier signal et du second signal ;
la détermination, à l'aide du ou des processeurs (306), d'un ajustement pour la deuxième section (224) du rabatteur (221) en fonction de l'autre signal et du second signal ; et
la transmission d'instructions, à l'aide du ou des processeurs (306), à un premier actionneur (228) pour régler la première section (225) du rabatteur (221) indépendamment de la deuxième section (224) du rabatteur (221) de l'organe de coupe agricole (200), la première section de rabatteur (225) étant réglée pour maintenir une position de rabatteur souhaitée par rapport à un couvert végétal et/ou un sol du champ au fur et à mesure que la moissonneuse agricole (100) se déplace dans le champ ;
la transmission d'instructions, à l'aide du ou des processeurs (306), à un deuxième actionneur (228) pour régler la deuxième section (224) du rabatteur (221) indépendamment de la première section (225) du rabatteur (221) de l'organe de coupe agricole (200), la deuxième section de rabatteur (224) étant réglée pour maintenir la position de rabatteur souhaitée par rapport au couvert végétal et/ou au sol au fur et à mesure que la moissonneuse agricole (100) se déplace dans le champ.

12. Le procédé selon la revendication 11, comprenant la transmission d'instructions au premier actionneur (228) pour régler la première section (225) du rabatteur (221) le long d'un axe longitudinal (142) de l'organe de coupe agricole (200), en utilisant le ou les processeurs (306).

13. Le procédé selon la revendication 11 et la revendication 12, comprenant la transmission d'instructions au premier actionneur (228) pour régler la première section (225) du rabatteur (221) le long d'un axe vertical (144) de l'organe de coupe agricole (200), en utilisant le ou les processeurs (306).

14. Le procédé selon les revendications 11 à 13, dans lequel le paramètre de récolte comprend une densité d'une récolte (206).
